# FASCICULE DE BREVET EUROPEEN

(11) **EP 1 538 066 B1**
(45) Date de publication et mention de la délivrance du brevet: **01.04.2009**
(21) Numéro de dépôt: 04300837.4
(22) Date de dépôt: 01.12.2004
(51) Int. Cl.: B62D 5/04, H02K 7/06

(54) **Actionneur pour essieu de véhicule automobile comprenant un moteur électrique à rotor extérieur et essieu de véhicule automobile commandé par un tel actionneur**
Stellglied für eine Kraftfahrzeugachse mit einem Elektromotor mit Au enrotor, und Kraftfahrzeugachse, die von dem Stellglied gesteuert wird
Vehicle axle actuator comprising an electric motor with external rotor and vehicle axle steered by said actuator

(30) Priorité: 02.12.2003 FR 0314139
(43) Date de publication de la demande: 08.06.2005
(73) Titulaire: Renault, 92109 Boulogne Billancourt (FR)
(72) Inventeur: CALEGARI, Lionel, 78990, ELANCOURT (FR)

(56) Documents cités:
- EP-A- 1 236 637
- EP-A- 1 344 709
- DE-A- 3 836 255
- DE-A- 10 019 563
- DE-A- 10 202 483
- FR-A- 2 605 280
- US-A- 4 796 904
- US-A- 5 097 917
- US-B1- 6 453 761

## Description

La présente invention concerne un actionneur pour essieu de véhicule automobile à au moins quatre roues directrices comprenant un moteur éléctrique à rotor extérieur et un essieu commandé par un tel actionneur.

Un essieu de véhicule automobile comporte généralement deux bras oscillants longitudinaux portant chacun une roue à une de leur extrémité, et qui sont articulés à leur autre extrémité sur la carrosserie du véhicule. Des moyens élastiques et des amortisseurs prenant appui sur les bras soutiennent la carrosserie, et dans le cas d'un essieu souple, une barre transversale anti-dévers élastiquement déformable en torsion est rigidement reliée par ses extrémités aux deux bras oscillants.

Dans les virages, les roues d'un véhicule automobile subissent des efforts latéraux dans la direction du virage. Afin d'améliorer l'équilibre du véhicule et contrôler de façon active son comportement en lacets, un dispositif commandant une rotation limitée des roues arrières est installé. On parle alors de système quatre roues directrices.

On connaît par la demande de brevet EP-A-0 890 499, un dispositif d'orientation des roues arrières comprenant un actionneur comprenant un moteur rotatif creux dont le rotor intérieur est accouplé avec un train épicycloïdal comprenant un écrou coopérant avec la partie filetée d'un bras, portant à chacune de ses extrémités une rotule reliée à une roue arrière. La rotation de l'écrou, bloqué en translation, permet le déplacement du bras suivant son axe. Les roues sont ainsi commandées en rotation par l'intermédiaire de l'actionneur monté sur cet essieu. Un tel actionneur présente l'inconvénient d'engendrer un encombrement important et possède une structure complexe.

Le document US 6 453 761, qui montre le préambule de la revendication 1, décrit un actionneur comprenant un moteur électrique pourvu d'un rotor, d'un stator monté à l'intérieur du rotor, et de roulements montés radialement entre ledit stator et un écrou lié rigidement avec le rotor et coopérant avec une tige filetée. L'écrou bloqué en translation, une rotation du rotor entraînant ainsi la translation de la tige filetée.

Les documents DE 38 36 255 et DE 100 19 563, qui montrent le préambule de la revendication 6, décrivent des essieux de véhicule dans lesquels un actionneur, commandant une tringlerie d'orientation des roues, comprend un moteur électrique muni d'un stator et d'un rotor, monté à l'intérieur du stator. Dans ces deux cas également, l'architecture autour de l'actionneur, et notamment de l'écrou associé, implique un encombrement important et pénalisant.

La présente invention a donc pour objet de résoudre ces difficultés en proposant un actionneur d'encombrement particulièrement restreint.

A cet effet, l'actionneur selon l'invention est destiné à un essieu de véhicule automobile équipé d'un moteur électrique comprenant un rotor et un stator. Le stator du moteur électrique est disposé à l'intérieur du rotor du moteur électrique et le rotor est assemblé sur un écrou d'une vis, de façon que la vis entraîne en translation un arbre de sortie lorsque le rotor est en rotation.

Un tel actionneur présente l'avantage de posséder un écrou ayant un diamètre intérieur supérieur au diamètre extérieur du moteur électrique. Il est possible de positionner l'écrou et la vis, transformant le mouvement de rotation en un mouvement de translation, de façon à entourer le rotor du moteur électrique et à obtenir ainsi un actionneur pour essieu souple arrière présentant un encombrement réduit.

De préférence, l'axe du moteur électrique est aligné avec un axe de l'arbre de sortie de l'actionneur. L'actionneur peut comprendre un moyen de fixation aligné avec l'axe de l'arbre de sortie.

Dans un mode de réalisation, l'actionneur comprend des moyens de retenues aptes à empêcher la rotation de l'arbre de sortie.

L'actionneur peut avantageusement comprendre un moteur électrique de type brushless.

L'invention concerne également un essieu pour véhicule automobile à au moins quatre roues directrices comprenant au moins deux bras oscillants portant des supports de roues aptes à pivoter selon un axe sensiblement vertical par rapport audits bras oscillants pour orienter les roues. Il comprend un actionneur équipé d'un moteur électrique comprenant un rotor et un stator, le stator du moteur électrique étant disposé à l'intérieur du rotor du moteur électrique et le rotor étant assemblé sur un écrou d'une vis, de façon que ladite vis entraîne en translation un arbre de sortie lorsque le rotor est en rotation et L'écrou présente un diamètre intérieur supérieur au diamètre extérieur du rotor du moteur électrique. L'actionneur actionne une tringlerie de commande d'orientation des roues commune reliés à des supports de roues et comprenant un palonnier.

Un tel essieu présente l'avantage de nécessiter une zone d'encombrement particulièrement réduite. Il est ainsi possible de prévoir des moyens de sécurisation sur l'arbre de sortie afin d'éviter une rotation intempestive des roues en cas de défaillance de l'actionneur. Il est également possible de prévoir un logement pour d'autres éléments du véhicule automobile à proximité de cet essieu, par exemple une roue de secours, dans le cas d'un essieu arrière.

Dans un mode de réalisation, l'axe de l'arbre de sortie de l'actionneur est aligné sur l'axe de rotation des bras oscillants de l'essieu. Etant donné que l'axe du moteur électrique est aligné avec l'axe de l'arbre de sortie de l'actionneur, l'actionneur est neutre lorsque l'essieu débat, il n'induit pas d'efforts parasites. Il est également possible avec un tel essieu de positionner l'actionneur loin des roues du véhicule automobile, et proches des moyens élastiques et amortisseurs prenant appui sur les bras oscillants, afin de ne pas réduire l'efficacité élastique de l'essieu.

Un tel essieu a l'avantage de pouvoir orienter les roues du véhicule avec un actionneur pouvant être placé hors de sources chaudes se trouvant sur le véhicule automobile, tel que le tuyau d'échappement des gaz de combustion du moteur et ne comprenant qu'une unique sortie en translation.

Dans un mode de réalisation, l'essieu est un essieu souple arrière et l'actionneur est fixé sur la carrosserie d'un véhicule automobile.

Dans un mode de réalisation, l'actionneur est fixé sur un bras oscillant. Ce positionnement permet de supprimer certains mouvements induits par le mouvement de l'essieu par rapport à la carrosserie du véhicule automobile.

De préférence, l'actionneur est décentré par rapport à un axe longitudinal de l'essieu.

L'invention sera mieux comprise à l'étude de la description détaillée d'un mode de réalisation nullement limitatif et illustré par les dessins annexés sur lesquels :
- la figure 1 est une vue en perspective d'un essieu souple arrière; et
- la figure 2 est un schéma de principe de l'actionneur de l'essieu souple arrière.

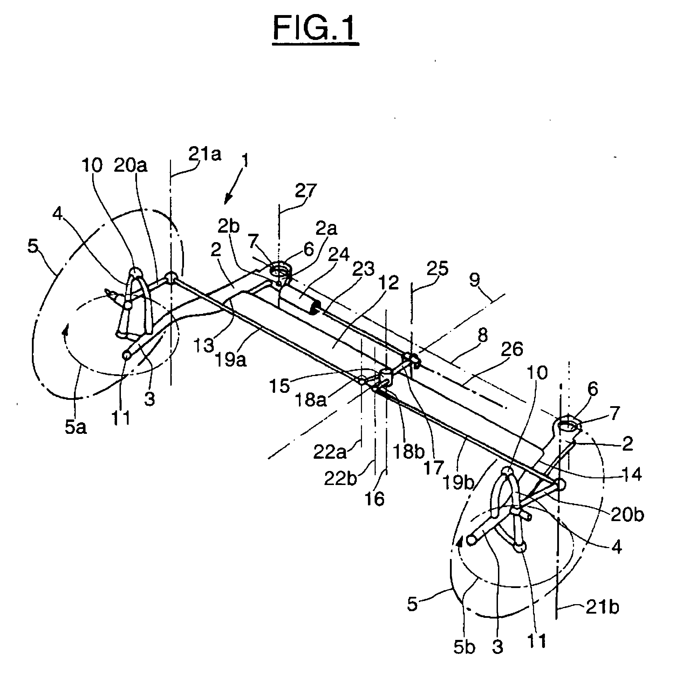

A titre d'exemple un essieu souple a été représenté sur la figure 1. Il sera compris que tout type d'essieu peut permettre la mise en place d'un tel actionneur. Dans la description qui va suivre, un essieu souple sera plus particulièrement décrit. Un essieu souple 1 comprend deux bras oscillants longitudinaux 2. Chaque bras oscillant 2 est relié par une extrémité 3, dirigée vers l'arrière du véhicule à un support de roues 4. Les roues sont symbolisées par des ellipses 5. L'autre extrémité 6 des bras oscillants 2, dirigée vers l'avant du véhicule, est articulée à la carrosserie du véhicule (non représentée) au niveau d'un alésage 7. Les deux bras oscillants 2 sont articulés sur la carrosserie autour d'un même axe de rotation 8, transversal par rapport à l'axe longitudinal médian 9 de l'essieu 1. Chaque support de roue 4 est relié aux bras oscillants 2 par deux articulations 10 et 11, de façon connue par exemple avec des rotules. Une traverse 12, élastiquement déformable en torsion, est rigidement reliée par ses extrémités 13 et 14 aux deux bras oscillants 2, sensiblement parallèlement et à proximité de l'axe de rotation 8. La traverse 12 peut présenter un profil en forme de V couché, dont l'ouverture est dirigée vers l'avant du véhicule. Bien entendu des traverses de forme différentes peuvent être utilisées. Un palonnier 15 est relié sensiblement au milieu de la traverse 12, par un axe d'articulation 16 sensiblement vertical. Le palonnier 15 s'étendant transversalement à la traverse 12, comporte une extrémité 17 dirigée vers l'avant du véhicule, et deux extrémités 18a et 18b dirigées vers l'arrière du véhicule. Les extrémités 18a et 18b du palonnier sont reliées à chaque support de roue 4 par deux bielles 19a et 19b sensiblement parallèles à la traverse 12 par l'intermédiaire de deux bras 20a et 20b, s'étendant vers l'avant du véhicule de façon sensiblement horizontal. L'extrémité de la bielle 19a, respectivement 19b, est alors articulée à l'extrémité libre du bras 20a, respectivement 20b, autour d'un axe 21a, respectivement 21b, sensiblement vertical, tandis que l'autre extrémité est articulée à l'extrémité 18a, respectivement 18b, du palonnier autour d'un axe 22a, respectivement 22b, sensiblement vertical. Le palonnier 15 peut présenter par exemple une forme de fourchette, dont l'extrémité du manche forme l'extrémité avant 17, et l'extrémité des dents forme les extrémités arrières 18a et 18b. L'axe de rotation 16 du palonnier 15 est fixé sur les deux dents de la fourchette. Bien entendu d'autres formes peuvent être envisagées. L'extrémité avant 17 du palonnier est reliée par l'intermédiaire d'un arbre de sortie 23 d'un actionneur linéaire 24 au bras oscillant gauche 2. Bien entendu, il est possible de relier l'extrémité avant du palonnier au bras oscillant droit 2. L'extrémité de l'arbre de sortie 23 est articulée à l'extrémité avant 17 du palonnier autour d'un axe 25 sensiblement vertical. L'axe 26 de l'arbre de sortie 23 est sensiblement parallèle à la traverse 12. L'actionneur 24 est décentré par rapport à l'axe longitudinal médian 9 de l'essieu 1 et articulé à l'extrémité avant 6 du bras oscillant gauche 2 autour d'un axe sensiblement vertical 27, passant par l'axe 26 de l'arbre de sortie 23. Bien entendu, l'actionneur 24 peut également être fixé à différents endroits de la carrosserie du véhicule, il peut avantageusement être placé de façon que l'axe 26 de l'arbre de sortie 23 est confondu avec l'axe de rotation 8 des deux bras oscillants, l'axe 26 de l'arbre de sortie 23 doit toutefois rester sensiblement parallèle à la traverse 12.

Le fonctionnement de l'essieu 1 est le suivant : l'actionneur 24 commande la translation de l'arbre de sortie 23 qui provoque la rotation du palonnier 15 autour de son axe 16 dans le sens horaire. Cette rotation déplace l'extrémité arrière 18 du palonnier vers la gauche du véhicule, ce qui provoque la rotation des supports de roues 4, autour d'un axe sensiblement vertical, vers la gauche, représenté sur la figure 1 par les flèches 5a et 5b, par l'intermédiaire des bielles 19a et 19b. Une translation de l'arbre de sortie 23 dans le sens inverse fait tourner le palonnier 15 dans le sens trigonométrique provoquant la rotation des roues vers la droite.

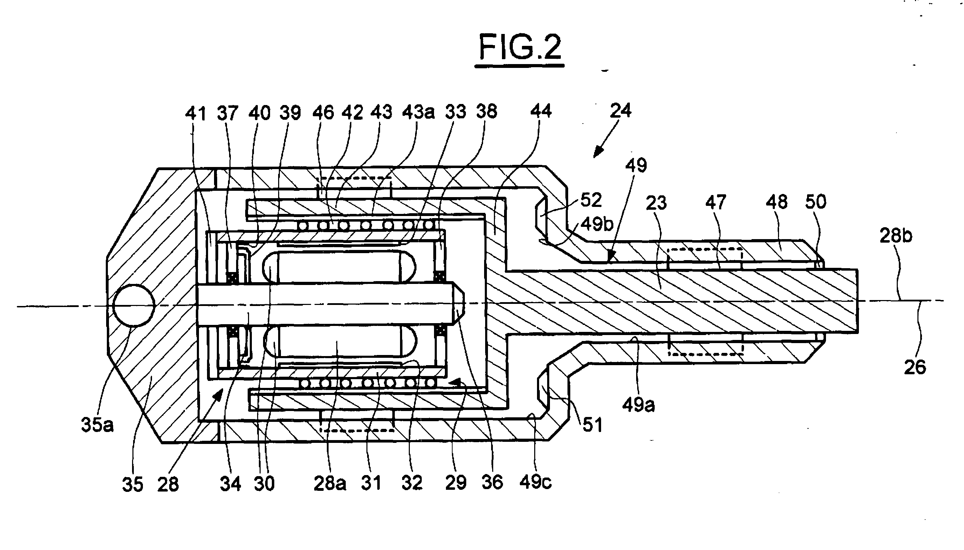

Sur la figure 2, un actionneur 24 comprend un moteur électrique 28, un ensemble vis écrou 29 relié au moteur électrique 28 et à un arbre de sortie 23.

Le moteur électrique 28, pouvant être par exemple de type brushless, comprend un stator 28a constitué par un empilement de tôles à l'intérieur duquel est disposé un bobinage 30, et un rotor 31 disposé à l'extérieur du stator 28a, et constitué par un arbre creux et comprenant des aimants 32 et 33 orientés vers le stator 28a. Les aimants 32 et 33 peuvent être constitués de façon connue en ferrite ou en néodyme-fer-bore. Le stator 28a du moteur électrique 28 est monté au niveau d'un arbre de support 34. Un axe 28b du moteur électrique 28 est confondu avec l'axe 26 de l'arbre de sortie 23.

L'arbre de support 34 est prolongé à une extrémité par une pièce de support 35, et relié à l'autre extrémité par une pièce de butée 36, pouvant par exemple être en caoutchouc. Sur l'arbre de support 34, deux roulements 37 et 38, par exemple à contact oblique, sont disposés de chaque côté du stator 28a du moteur électrique 28 entre l'arbre de support 34 et le rotor 31 du moteur électrique 28. Les roulements 37 et 38 sont aptes à transmettre des efforts axiaux de leur bague extérieure vers leur bague intérieure (non représentées).

Un capteur de position 39, composé de trois sondes à effet Hall (non représentées), est fixé sur l'arbre de support 34 entre le stator 28a du moteur électrique 28 et le roulement 37. Une couronne aimantée 40 est disposée au niveau du rotor 30 du moteur électrique 28, en regard du capteur de position 39. La couronne aimantée 40 est apte à servir de cible aux sondes à effet Hall (non représentées) du capteur de position 39, sa polarisation étant liée à la position des aimants 32 et 33. Bien entendu, le positionnement du capteur de position 39 et de la couronne d'aimant ne sont nullement limitatifs, la couronne aimantée 40 doit cependant se trouver à proximité des aimants 32 et 33.

Un capteur de position de précision 41 est monté sur l'arbre de support 34 entre le stator 28a du moteur électrique 28 et la pièce de support 35 permettant de déterminer la position de l'arbre de sortie 23. Dans une variante de réalisation, il est également envisageable d'intégrer au roulement 37 ou 38 le capteur de position de précision 41.

L'arbre de support 34 est creux afin de pouvoir permettre le passage des câbles d'alimentation (non représentés) du stator 28a du moteur électrique 28 et des capteurs de position 39 et 41 jusqu'à la pièce de support 35 apte à assurer le support du bobinage 30 du stator 28a. En variante, il est également envisageable de prévoir au niveau de l'arbre de support 34 des connexions moulées afin de remplacer les câbles d'alimentation.

La pièce de support 35 comprend du côté opposé à l'arbre de support 34 un évidement (non représenté) de forme correspondante avec l'extrémité 2a en saillie du bras oscillant gauche 2 de l'essieu souple 1 de façon à réaliser une liaison tenon mortaise. Un évidement 2b du bras oscillant gauche 2 (figure 1) est en regard avec un perçage traversant 35a de la pièce de support 35, perpendiculaire par rapport à l'évidement de l'arbre de support 34. Un moyen de fixation (non représenté), par exemple de type goujon, permet alors de fixer l'actionneur 24 à l'extrémité avant 6 du bras oscillant gauche 2 (figure 1). Le moyen de fixation de l'actionneur 24 est aligné avec l'axe 26 de l'arbre de sortie 23. Bien entendu, d'autres moyens de fixation sont envisageables pour réaliser l'accrochage de l'actionneur 24.

Un écrou 42 de l'ensemble vis écrou 29, assemblé rigidement sur le rotor 31 du moteur électrique 28 et dont le filetage est à l'extérieur, coopère avec une vis 43 dudit ensemble vis écrou 29 comprenant un filetage intérieur 43a et ayant une longueur sensiblement supérieure à l'encombrement axial du moteur électrique 28. La vis 43, par exemple du type vis à bille, est prolongée à une extrémité du côté opposé à la pièce de support 35 par une pièce intermédiaire 44 de forme cylindrique elle-même prolongée rigidement par l'arbre de sortie 23.

La vis 43 et l'arbre de sortie 23 sont guidés en translation, suivant l'axe 26 du bras de déplacement 23 respectivement par des paliers coulissants 46 et 47 accouplés de manière rigide à un carter tubulaire 48. Les paliers coulissants 46 et 47 sont munis de moyens de retenues (non représentés) aptes à empêcher la rotation de la vis 43 et de l'arbre de sortie 23, pouvant être par exemple un rainurage au niveau des paliers coulissants 46 et 47 coopérant avec une saillie de la vis 43. Dans une variante de réalisation, les paliers coulissants 46 et 47 peuvent comprendre un système de cannelures intégrées.

Le carter tubulaire 48 comprend un alésage étagé 49 présentant un premier alésage 49a, relié par un épaulement 49b, à un deuxième alésage 49c de plus grand diamètre, ledit diamètre étant sensiblement supérieur au diamètre de la vis 43. Une extrémité du carter tubulaire 48 est relié rigidement à la pièce de support 35, l'autre extrémité comprenant un joint d'étanchéité 50 permettant de garder l'actionneur 24 isolé du milieu environnant. L'arbre de sortie 23 est en saillie par rapport au carter 48 de façon à être relié à l'extrémité avant du palonnier 17 (figure 1). Le carter tubulaire comprend au niveau de l'épaulement 49 des éléments de butée 51 et 52, pouvant être en caoutchouc.

Le fonctionnement de l'actionneur 24 est le suivant : le rotor 31 du moteur électrique 28 entraîne en rotation l'écrou 42. La rotation de l'écrou 42 provoque la translation de la vis 43 suivant son axe et de l'arbre de sortie 23. Le capteur de position 41 détecte la position du rotor 31 du moteur électrique 28 afin de déterminer le positionnement de l'arbre de sortie 23 qui commande la rotation des roues arrières.

La présente invention permet ainsi d'obtenir un actionneur pour essieu de véhicule automobile simple et économique, et présentant un encombrement particulièrement réduit.

## Revendications

1. Actionneur pour essieu de véhicule automobile équipé d'un moteur électrique (28) comprenant un rotor (31) et un stator (28a) disposé à l'intérieur du rotor (31) du moteur électrique (28), le rotor (31) étant assemblé sur un écrou (42) d'une vis (43), de façon que ladite vis entraîne en translation un arbre de sortie (23) lorsque le rotor (31) est en rotation, **caractérisé en ce que** l'écrou (42) présente un diamètre intérieur supérieur au diamètre extérieur du rotor (31) du moteur électrique (28).

2. Actionneur selon la revendication 1, **caractérisé par le fait qu'**un axe (28b) du moteur électrique (28) est aligné avec un axe (26) de l'arbre de sortie (23).

3. Actionneur selon les revendications 1 ou 2, **caractérisé par le fait qu'**il comprend un moyen de fixation aligné avec un axe (26) de l'arbre de sortie (23).

4. Actionneur selon l'une quelconque des revendications précédentes, **caractérisé par le fait qu'**il comprend des moyens de retenues aptes à empêcher la rotation de l'arbre de sortie (23).

5. Actionneur selon l'une quelconque des revendications précédentes, **caractérisé par le fait que** le moteur électrique (28) est un moteur électrique de type brushless.

6. Essieu pour véhicule automobile à au moins quatre roues directrices comprenant au moins deux bras oscillants (2) portant des supports de roue (4) aptes à pivoter selon un axe sensiblement vertical par rapport auxdits bras oscillants (2) pour orienter les roues, et comprenant un actionneur (24) équipé d'un moteur électrique (28) comprenant un rotor (31) et un stator (28a) disposé à l'intérieur du rotor (31) du moteur électrique (28), ledit actionneur (24) commandant un palonnier d'une tringlerie commune d'orientation des roues reliée aux supports de roue (4), **caractérisé en ce que** le rotor (31) est assemblé sur un écrou (42) d'une vis (43), de façon que ladite vis (43) entraîne en translation un arbre de sortie (26) lorsque le rotor (31) est en rotation, et **en ce que** l'écrou (42) présente un diamètre intérieur supérieur au diamètre extérieur du rotor (31) du moteur électrique (28).

7. Essieu selon la revendication 6, **caractérisé par le fait qu'**un axe (26) de l'arbre de sortie (23) de l'actionneur (24) est aligné sur un axe de rotation (8) des bras oscillants (2).

8. Essieu selon les revendications 6 ou 7, **caractérisé par le fait que** l'essieu est un essieu souple arrière et que l'actionneur (24) est fixé sur la carrosserie du véhicule.

9. Essieu selon la revendication 8, **caractérisé par le fait que** l'actionneur (24) est fixé sur un bras oscillant (2).

10. Essieu selon l'une quelconque des revendications 6 à 9, **caractérisé par le fait que** l'actionneur (24) est décentré par rapport à un axe longitudinal (9) de l'essieu.

## Claims

1. Actuator for motor vehicle axle fitted with an electric motor (28) comprising a rotor (31) and a stator (28a) placed inside the rotor (31) of the electric motor (28), the rotor (31) being assembled on a nut (42) of a screw (43), so that the said screw moves an output shaft (23) in translation when the rotor (31) is in rotation, **characterized in that** the nut (42) has an internal diameter greater than the external diameter of the rotor (31) of the electric motor (28).

2. Actuator according to Claim 1, **characterized in that** an axis (28b) of the electric motor (28) is aligned with an axis (26) of the output shaft (23).

3. Actuator according to Claim 1 or 2, **characterized in that** it comprises an attachment means aligned with an axis (26) of the output shaft (23).

4. Actuator according to any one of the preceding claims, **characterized in that** it comprises retention means capable of preventing the rotation of the output shaft (23).

5. Actuator according to any one of the preceding claims, **characterized in that** the electric motor (28) is an electric motor of the brushless type.

6. Axle for a motor vehicle with at least four steering wheels comprising at least two swing arms (2) having wheel supports (4) capable of pivoting on an axis substantially vertical relative to the said swing arms (2) in order to steer the wheels, and comprising an actuator (24) fitted with an electric motor (28) comprising a rotor (31) and a stator (28a) placed inside the rotor (31) of the electric motor (28), the said actuator (24) controlling a cross-bar of a common linkage for steering the wheels, the cross-bar being connected to the wheel supports (4), **characterized in that** the rotor (31) is assembled on a nut (42) of a screw (43), so that the said screw (43) moves an output shaft (26) in translation when the rotor (31) is in rotation, and **in that** the nut (42) has an internal diameter greater than the external diameter of the rotor (31) of the electric motor (28).

7. Axle according to Claim 6, **characterized in that** an axis (26) of the output shaft (23) of the actuator (24) is aligned on an axis of rotation (8) of the swing arms (2).

8. Axle according to Claims 6 or 7, **characterized in that** the axle is a flexible rear axle and that the actuator (24) is attached to the bodywork of the vehicle.

9. Axle according to Claim 8, **characterized in that** the actuator (24) is attached to a swing arm (2).

10. Axle according to any one of Claims 6 to 9, **characterized in that** the actuator (24) is off-centred relative to a longitudinal axis (9) of the axle.

## Patentansprüche

1. Stellglied für die Achse eines Kraftfahrzeugs ausgestattet mit einem einen Rotor (31) und einen innerhalb des Rotors (31) des Elektromotors (28) angeordneten Stator (28a) umfassenden Elektromotor (28), wobei der Rotor (31) auf einer Mutter (42) einer Schraube (43) derart montiert ist, dass bei drehendem Rotor (31) die Schraube eine Ausgangswelle (23) verschieblich antreibt, **dadurch gekennzeichnet, dass** die Mutter (42) einen Innendurchmesser aufweist, der größer ist als der Außendurchmesser des Rotors (31) des Elektromotors (28).

2. Stellglied nach Anspruch 1, **dadurch gekennzeichnet, dass** eine Achse (28b) des Elektromotors (28) mit einer Achse (26) der Ausgangswelle (23) fluchtet.

3. Stellglied nach den Ansprüchen 1 oder 2, **dadurch gekennzeichnet, dass** es ein Befestigungsmittel umfasst, das mit einer Achse (26) der Ausgangswelle (23) fluchtet.

4. Stellglied nach einem der vorangegangenen Ansprüche, **dadurch gekennzeichnet, dass** es Haltemittel umfasst, mit denen die Rotation der Ausgangswelle (23) verhindert werden kann.

5. Stellglied nach einem der vorangegangenen Ansprüche, **dadurch gekennzeichnet, dass** der Elektromotor (28) ein bürstenloser Elektromotor ist.

6. Kraftfahrzeugachse mit mindestens vier gelenkten Rädern, umfassend mindestens zwei Lenker (2), auf denen Radträger (4) gelagert sind, die zur Lenkung der Räder um eine im Wesentlichen senkrechte Achse gegenüber den Lenkern (2) schwenkbar sind, und umfassend ein Stellglied (24), das mit einem einen Rotor (31) und einen innerhalb des Rotors (31) des Elektromotors (28) angeordneten Stator (28a) umfassenden Elektromotor (28) ausgestattet ist, wobei das Stellglied (24) einen Umlenkhebel eines gemeinsamen Lenkgestänges zur Ausrichtung der mit den Radträgern (4) verbundenen Räder betätigt, **dadurch gekennzeichnet, dass** der Rotor (31) auf einer Mutter (42) einer Schraube (43) montiert ist, so dass bei drehendem Rotor (31) die Schraube (43) eine Ausgangswelle (23) verschieblich antreibt, und dass die Mutter (42) einen Innendurchmesser aufweist, der größer ist als der Außendurchmesser des Rotors (31) des Elektromotors (28).

7. Achse nach Anspruch 6, **dadurch gekennzeichnet, dass** eine Achse (26) der Ausgangswelle (23) des Stellglieds (24) mit einer Drehachse (8) der Lenker (2) fluchtet.

8. Achse nach Anspruch 6 oder 7, **dadurch gekennzeichnet, dass** die Achse eine flexible Hinterachse ist und das Stellglied (24) an der Karosserie des Fahrzeugs befestigt ist.

9. Achse nach Anspruch 8, **dadurch gekennzeichnet, dass** das Stellglied (24) an einem Lenker (2) befestigt ist.

10. Achse nach einem der Ansprüche 6 bis 9, **dadurch gekennzeichnet, dass** das Stellglied (24) exzentrisch zur Längsachse (9) der Achse angeordnet ist.
